# EUROPEAN PATENT SPECIFICATION

(11) **EP 1 469 486 B1**
(45) Date of publication and mention of the grant of the patent: **14.06.2006**
(21) Application number: 03076144.9
(22) Date of filing: 17.04.2003
(51) Int. Cl.: H01B 11/18, H01B 13/26, H01B 7/20, B23K 20/04

(54) **Copper clad aluminium strips and a process for making copper clad aluminium strips**
Mit Kupfer beschichtete Aluminiumstreifen und Verfahren zum Herstellen von mit Kupfer beschichteten Aluminiumstreifen
Bandes d'aluminium revêtues de cuivre et procédé de fabrication de bandes d'aluminium revêtues de cuivre

(43) Date of publication of application: 20.10.2004
(73) Proprietor: Dofasco Tubular Products Corporation, Pittsburgh, PA 15222 (US)
(72) Inventor: Austin, David, Attleboro, MA 02703 (US); Cabral, John, Pawtucket, Rhode Island02860 (US); Longever, Joseph, Fayetteville, Tennessee 37334 (US)
(74) Representative: Carpintero Lopez, Francisco

(56) References cited:
- GB-A- 1 479 912
- US-A- 3 360 409
- US-A- 3 854 193
- US-A- 5 223 349
- US-B1- 6 189 770

## Description

### Field of the Invention

The present invention relates generally to copper clad aluminum strips for use as conductors in coaxial cables. More particularly, the present invention relates to a copper clad aluminum strip capable of being formed into a tube and used as both the inner and outer conductors of a coaxial cable, wherein the strip has a first edge, a second edge, and a middle portion disposed between the first edge and the second edge and being clad with copper.

### Background of the Invention

Coaxial radio frequency cables traditionally consist of an internal copper conductor and external copper conductor with a dielectric in between. The dielectric surrounds and electrically insulates the inner conductor. The dielectric is usually a foam material. The copper conductors may be either smooth or corrugated.

Because copper is a costly metal, alternatives to pure copper are often sought. In the cable television industry, it is possible to replace the copper conductor on the inside with a copper clad aluminum conductor. That is possible because, due to the radio frequencies, the current in the internal conductor does not fill the total cross-section of the conductor. Instead, the current creeps to the outside of the conductor. That phenomenon is known as the skin effect. The skin effect allows the copper clad aluminum conductor to function like a conductor of pure copper.

A copper clad aluminum conductor such a conductor is disclosed in, for example, GB-A-1 479 912, which is considered to represent the closest prior art, is cheaper than a pure copper conductor because of the higher price of copper per weight unit versus the price of aluminum for the same weight unit. Moreover, there is a substantial difference in specific weight between the two metals. Copper has a specific weight which is more than three times higher than the specific weight of the aluminum. As a result, the use of copper clad aluminum wire is well established in radio frequency cables only where the internal conductor (in the form of a wire) has a diameter of less than 10 mm. Use of a copper clad aluminum for both the outer conductor and for an inner conductor greater than 10 mm in diameter has not proved practical because these conductors use a copper clad strip material that is seam welded into a tube to construct the wires of the coaxial cable. The copper clad aluminum strip is brittle at the copper/aluminum intermetallic weld seam which cracks and breaks when the cable is flexed. Because a copper clad aluminum strip would offer the substantial cost savings over pure copper conductors at the larger diameters, the need exists for a copper clad aluminum strip that can be formed into a conductor of sufficient diameter to be used in larger coaxial cables, i.e. cables having an inner diameter greater than 10 mm.

US-B-6 189 770 and US-A-3 854 193 disclose further examples of copper cladded aluminum products.

### Summary of the invention

The invention relates to a device and method as defined in the independent claims (embodiment thereof are defined in the dependent claims).

The present invention provides for copper clad aluminum strip capable of being formed into a tube, having a first edge and a second edge, wherein the width of the aluminum strip is wider than the copper portion, so that the first edge and the second edge consist entirely of aluminum.

Additionally, the present invention provides for an aluminum strip comprised of a first edge portion, a second edge portion, and a middle portion disposed between the first edge portion and the second edge portion and being clad with copper.

The present invention also provides for a copper clad aluminum conductor wherein at least 70% of the outer circumference of the conductor is clad with copper.

Further, the present invention provides for a copper clad aluminum conductor wherein at least 70% of the inner circumference of the conductor is clad with copper.

The present invention provides for a method for making a copper clad aluminum product, the method comprising the steps of, processing an aluminum strip in a chamber under shield gas to be substantially free from contaminants, processing a copper strip in a chamber under shield gas to be substantially free from contaminants, and bonding the aluminum strip and the copper strip together to form a copper clad aluminum strip, wherein the aluminium strip has a width and wherein the copper strip has a width being smaller that the width of the aluminium strip.

A variant of the invention provides for a method for making a copper clad aluminum product, the method comprising the steps of, processing an aluminum strip in a chamber under shield gas to be substantially free from contaminants, processing a copper strip in a chamber under shield gas to be substantially free from contaminants, and pressure-temperature bonding the aluminum strip and the copper strip together to form a copper clad aluminum strip.

The present invention provides the advantages of lower cost and lighter weight. Those, and other advantages and benefits will become apparent from the Detailed Description of the Invention.

### Brief Description of the Drawings

For the present invention to be easily understood and readily practiced, the present invention will now be described, for purposes of illustration and not limitation, wherein:
Figure 1 shows a prior art cable design with solid copper tubing for both the inner and outer conductors.
Figure 2 shows a cladding apparatus of the present invention used to create the copper clad aluminum strips of the present invention which may then be shaped into tubes for use as the inner and outer conductors of a coaxial cable.
Figure 3 shows a cross-sectional end view of the copper clad aluminum strips which may then be shaped into tubes for use as the inner and outer conductors of a coaxial cable.
Figure 4 shows a forming process used to form the copper clad aluminum strips into tubes for use as the inner and outer conductors of a coaxial cable.
Figure 5 shows a cross-sectional view of a copper clad strip formed into the shape of a tube which may be used as the outer conductor of a coaxial cable, and specifically shows the weld seam.
Figure 6 shows a cross-sectional view of a coaxial cable resulting from the present invention with copper clad aluminum tubing for both the inner and outer conductors.
Figure 7 shows a graph plotting the attenuation of a coaxial cable constructed using conductors according to the present invention and the attenuation of a prior art coaxial cable versus the width of the weld seam.

### Detailed Description of the Invention

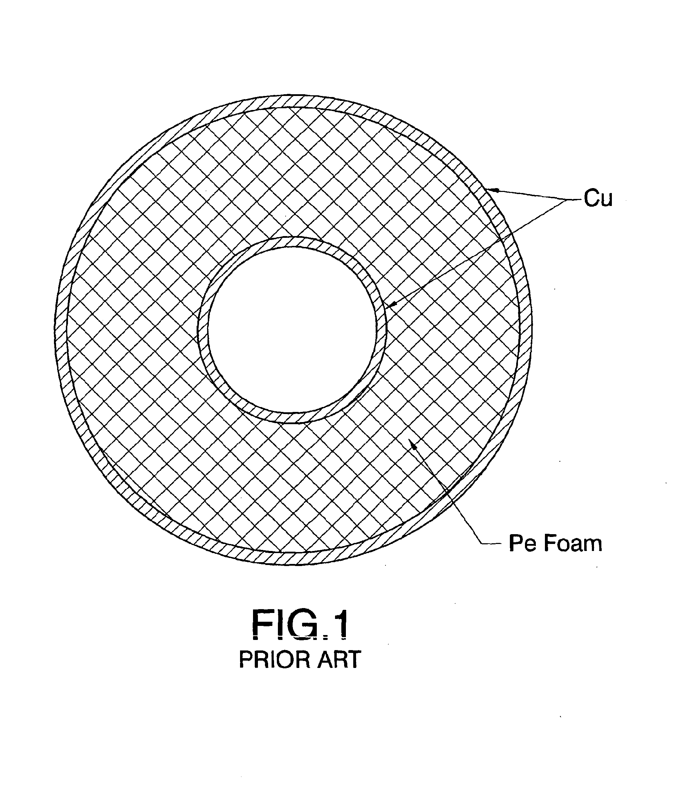

Figure 1 shows a prior art cable design with solid copper tubing for both the inner and outer conductors. As previously discussed, copper is a costly metal and therefore for cost reduction purposes it is of interest to use an alternative to pure copper conductors.

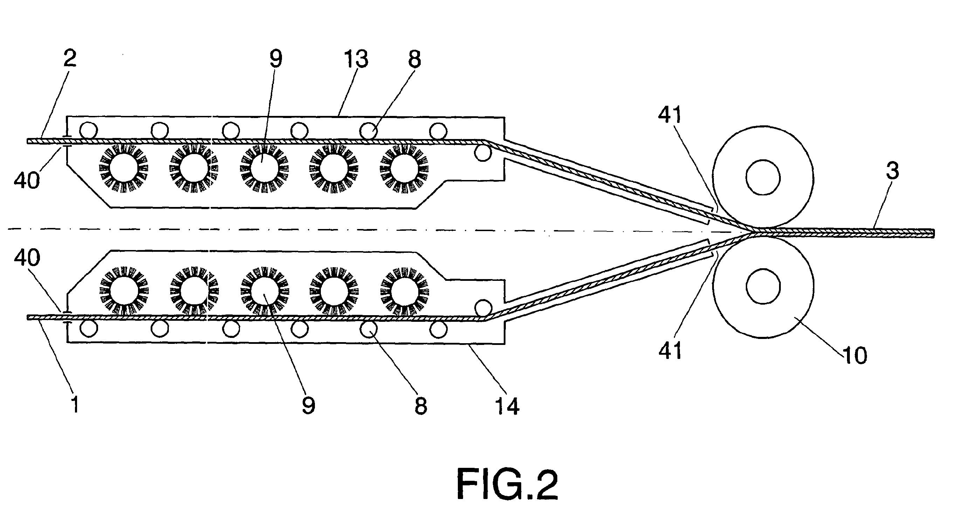

Figure 2 shows a cladding apparatus according to the present invention which may be used to create the copper clad aluminum strips, which strips may then be shaped into tubes for use as the inner and outer conductors of, for example, a coaxial cable. As shown in Figure 2, aluminum strip 1 and copper strip 2 are moved by support rolls 8. It is understood that aluminum strip 1 may be pure aluminum, one of the series 3000 aluminum alloys, or a high strength high magnesium strength aluminum, among others. Aluminum strip 1 and copper strip 2, processed to be free from organic contaminations, are paid off in a continuous manner from their pay-off's (not shown). In two separate chambers 13, 14, copper strip 2 and aluminum strip 1, respectively, are brushed by brushes 9 under a shield gas or reducing gas to prevent the formation of oxide at the bond interface. It is preferable that chambers 13, 14 be substantially enclosed so that the pressure inside chamber 13, 14 is above atmospheric pressure. That is, chambers 13, 14 may be partially sealed at chamber entrances 40 by any suitable mechanism that will reduce the amount of escaping gas while not damaging the incoming strip, such as a felt pad. This will allow strips 1 and 2 to enter their respective chambers with minimal pressure loss inside chambers 13 and 14. Strips 1 and 2 exit their respective chambers 13, 14 through chamber exits 41 under cover of the exiting pressurized shield gas. Chamber exits 41 may simply be narrow slots or any other suitable mechanism to provide for minimal pressure loss inside chambers 13,14. The average pressure inside chambers 13,14 is preferably greater than atmospheric and may be 1.013 bars. As previously stated, this ensures that the activated surfaces of strips 1 and 2 are protected from oxidation. The shield gas may be an inert gas. It is preferable, but not necessary, that the shield gas be argon or helium, or a mixture of argon or helium. It is also preferable that the chamber 13, 14 contain less than 8 ppm oxygen.

Strips 1 and 2 exit chambers 13, 14 and meet in the slot of rolling mill 10 where they are crush bonded to form an overlaid copper clad aluminum strip 3. It is preferable that rolling mill 10 be physically close to exits 41 so that the activated surfaces of copper strip 2 and aluminum strip 1 are protected by the shield gas from oxidation until they meet in the slot of rolling mill 10. As strips 1 and 2 meet in the slot of rolling mill 10, the pressure of the rolling mill 10 causes an increase in temperature, and as a result of the pressure and temperature a bond is formed between strips 1 and 2. However, it is understood that other known bonding methods may be used to create the bond between strips 1 and 2, such as a bond where heat is added to create a temperature higher than that resulting from pressure alone. A reduction of the total thickness of the two metals can be in a range of 25% to 65% to give the desired bond without intermediate annealing and with the exactly required strip width. It is preferable, but not necessary, that the thickness of the copper portion 2 is less than approximately 12% of the total thickness of the copper clad aluminum strip 3. The thinner the copper, the less expensive the final product.

Common prior art processes to clad strips of different metals are known to use activated strips. These activated strips are reduced together by approximately 60% or more reduction of the combined total thickness of both metals in an air atmosphere. This high reduction breaks the oxide layers on the contact surfaces and makes the virgin areas of the two metals bond. However, sometimes that is not sufficient to create the desired bond and an annealing process is necessary to improve the bond strength. Additionally, the high reduction can cause the edges of the strip to crack which then requires that a trimming step be implemented. The additional trimming step results in high costs as a result of the scrap. Also, aluminum oxide, which can remain at the bond interface, can cause fracturing of the thin copper cladding during subsequent cold working operations. Therefore, this prior art process is not economically very viable. Additionally, this prior art process has a low efficiency due to the annealing cost for the bond. Therefore, the above identified process of the present invention provides for many advantages over the prior art process as discussed.

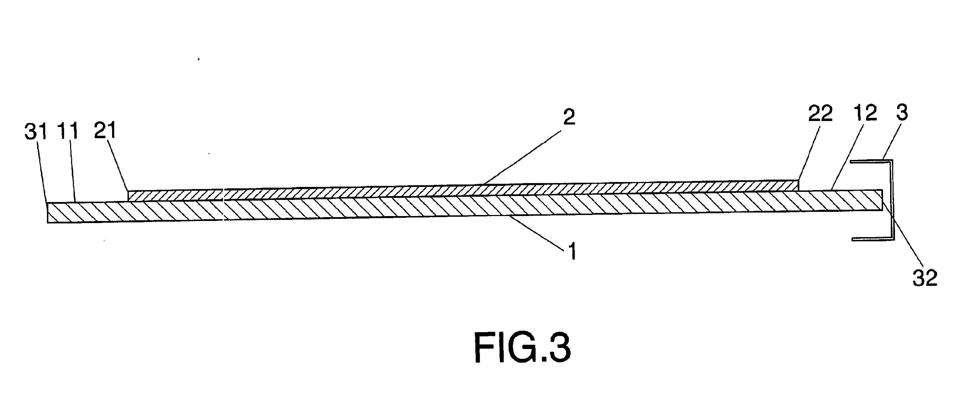

Figure 3 shows a cross-sectional end view of copper clad aluminum strip 3 which may then be shaped into a tube to serve as either the inner or outer conductor of a coaxial cable. As shown in Figure 3, it is preferable that the width of aluminum portion 1 of copper clad aluminum strip 3 be wider than the width of copper portion 2 of copper clad aluminum strip 3. More specifically, it is preferable to have the edges 11, 12 of aluminum portion 1 extend beyond the ends 21, 22, respectively, of the copper portion 2 of copper clad aluminum strip 3. The width of copper portion 2 of copper clad aluminum strip 3 is preferably no greater than approximately 30% less than the width of aluminum portion 1 of copper clad aluminum strip 3. It is preferable to have edges 11, 12 of aluminum which are of a minimal size. Edges 11, 12 of aluminum should be just wide enough to produce the smallest possible weld seam or gap when ends 31, 32 of aluminum portion 1 are brought into contact as described below. The dimensions of edges 11, 12 may be optimized so that after manufacturing of conductors of a radio frequency cable therefrom, the increase in the attenuation of resulting cable is less than 0.8% compared to an all copper conductor coaxial radio frequency cable for all frequencies of interest.

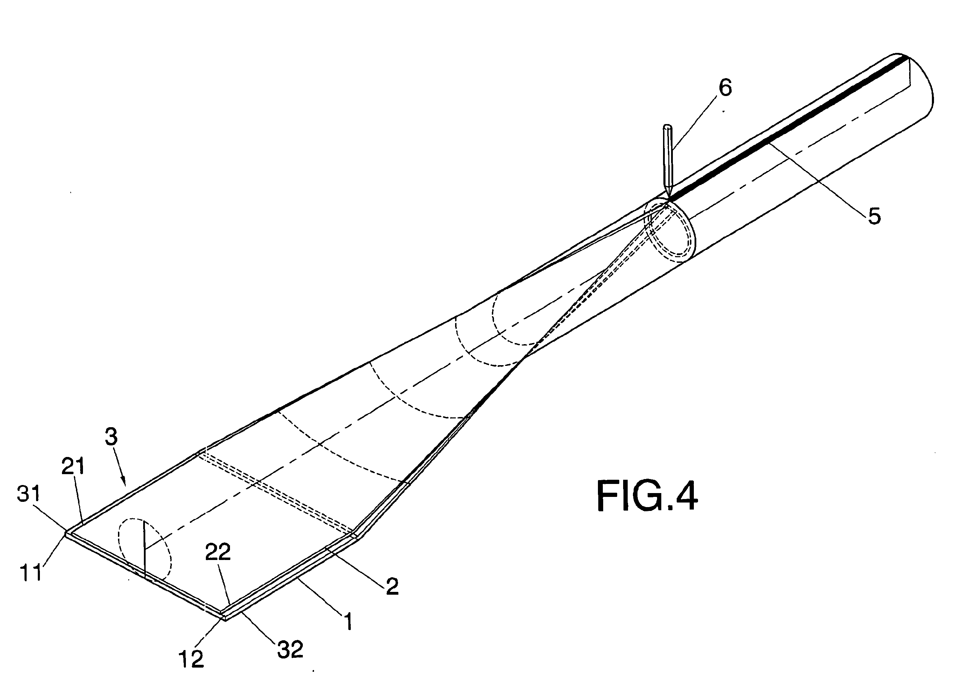

Figure 4 shows a forming process which may be used to form the copper clad aluminum strips into tubes for use as the inner and outer conductors of a coaxial cable. As shown in Figure 4, copper clad aluminum strip 3 is folded to form a tube bringing ends 31, 32 into contact. Because copper portion 2 is not as wide as aluminum portion 1, ends 21, 22 are not brought into contact. Any known folding method may be used. The excess aluminum portions 11, 12 of the copper clad aluminum strip are then passed under a welding electrode 6 to form a weld seam 5. That is, aluminum portions 11, 12 are welded together to keep copper clad strip 3 in the shape of the formed tube. Figure 4 shows the tube being formed with copper portion 2 of copper clad aluminum strip 3 being on the interior of the resultant formed tube. It is understood that the tube may also be formed so that copper portion 2 of copper clad aluminum strip 3 is on the exterior of the resultant formed tube (not shown). In either case, the excess aluminum portions 11, 12 of copper clad aluminum strip 3 are welded together to form weld seam 5.

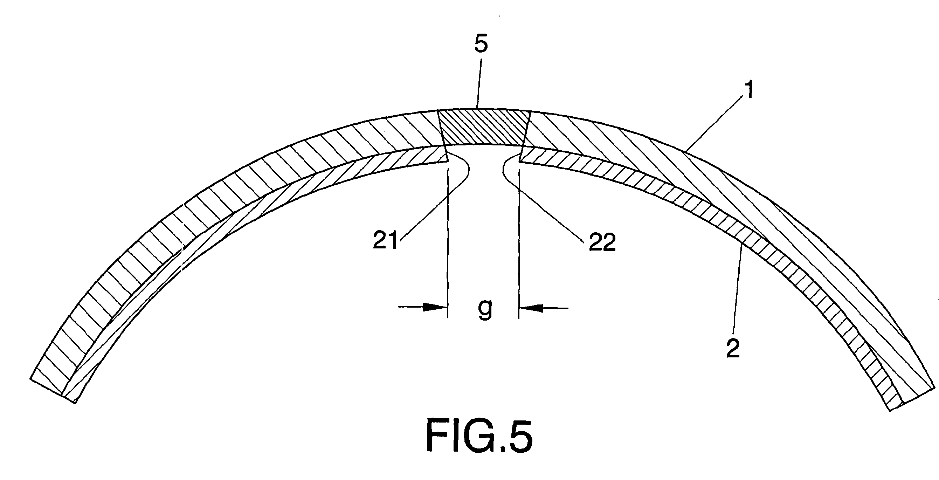

Figure 5 shows a cross-sectional view of a copper clad strip 3 formed into the shape of a tube which may be used as the outer conductor of a coaxial cable, and specifically shows weld seam 5. Also shown in Figure 5 is the gap "g" which results in copper layer 2 when aluminum portions 11, 12 are welded together.

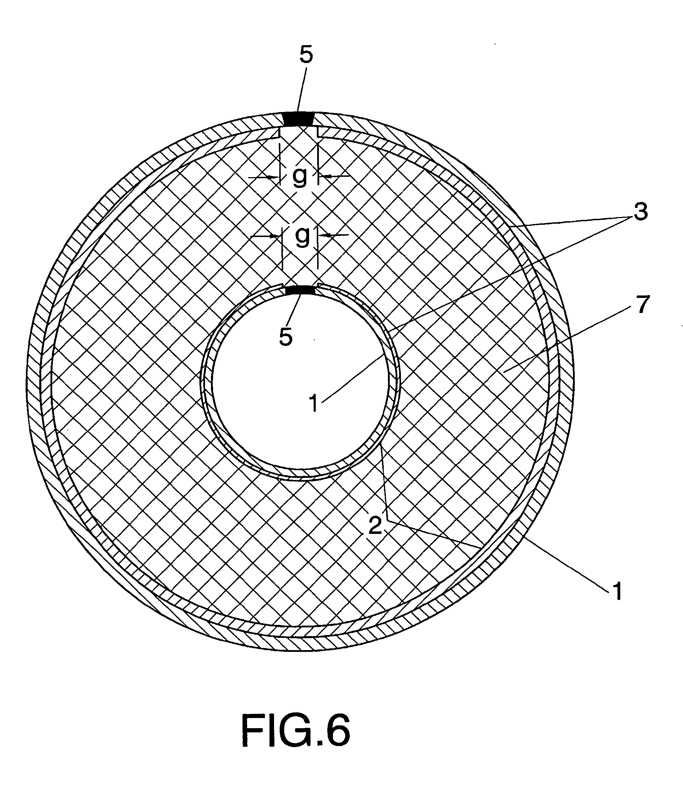

Figure 6 shows a cross-sectional view of a coaxial cable resulting from the present invention with copper clad aluminum tubing for both the inner and outer conductors. Inner copper clad aluminum strip 3 may be either corrugated or smooth and functions as the inner conductor. Copper portion 2 of inner copper clad aluminum strip 3 is on the outside of strip 3. Dielectric 7 is shown disposed between the inner and outer copper clad aluminum strips 3. Dielectric 7 is typically physically foamed polyethylene ("PE"). Outer copper clad aluminum strip 3 may be either corrugated or smooth and functions as the outer conductor. Copper portion 2 of outer copper clad aluminum strip 3 is on the inside of strip 3. Both inner and outer copper clad aluminum strips 3 have a small gap "g" in copper portion 2 as shown in Figure 6. The relation of these gaps to the circumference of strip 3 increases the attenuation of a signal conducted along the cable. The width of the gap also depends on the welding process, but according to the present invention, strip 3 can be manufactured for every welding process to give a minimum seam width and accordingly the least increase in attenuation.

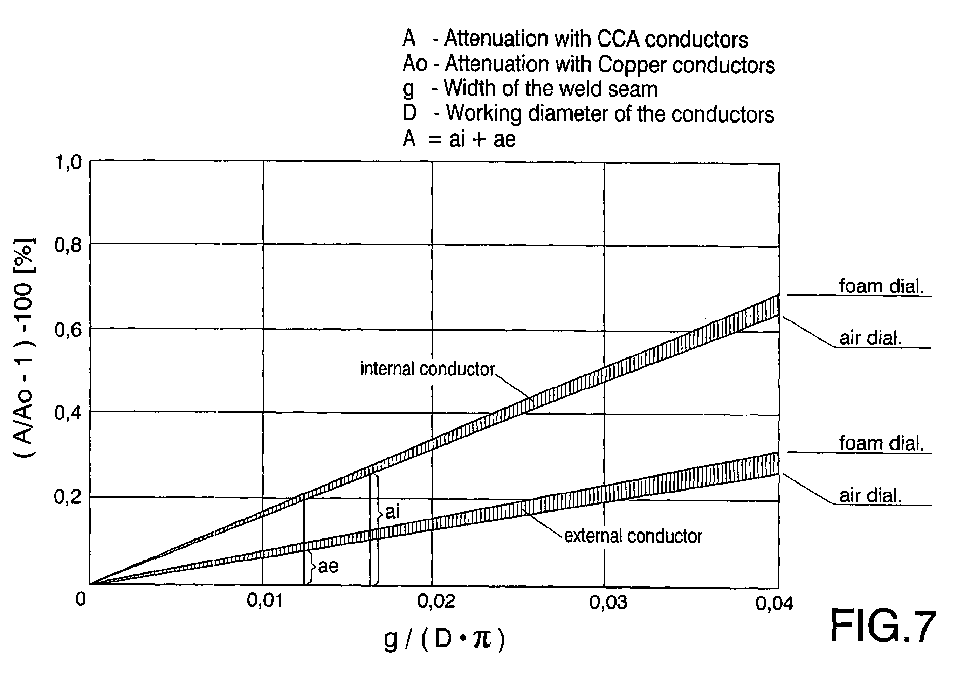

Figure 7 shows a graph plotting the attenuation of a coaxial cable using conductors according to the present invention and the attenuation of a prior art coaxial cable versus the width of weld seam 5 (which is the same as the width of the gap "g"). Figure 7 shows the interdependence between the increase of the attenuation and the relation of the gap versus the circumference of the working diameter of the conductors 3.

The total attenuation "A" of the present invention copper clad aluminum/ copper clad aluminum conductor cable is the sum of the attenuation of the internal conductor "ai" and the attenuation of the external conductor "ae". "A" is shown in relation to "Ao" which is the attenuation of an analog coaxial cable with copper/copper conductors as shown in Figure 7.

Though for any copper clad aluminum conductor cable, the increase of the attenuation does not exceed 1 % in the worst case, Figure 7 shows the possibility to reduce any increase of the attenuation to a minimum by producing a tailor made copper clad aluminum strip for each possible coaxial cable which has in both conductors the smallest possible gap.

One problem when welding prior art cladded strip into the form of a tube lies in the different melting points of the two clad metals. For example, if the strip is copper clad aluminum, and if one tries to weld the copper, the aluminum vaporizes. If one tries to weld the aluminum, the copper goes into solution and makes the seam brittle. The present invention solves this problem by producing a strip which has an aluminum area to be welded free from copper.

Although the present invention has been described in conjunction with preferred embodiments thereof, those of ordinary skill in the art will recognize that many modifications and variations may be made. The following claims are intended to cover all such modifications and variations.

## Claims

1. An overlaid, copper clad, aluminum strip for use as a conductor, said strip being capable of being formed into a tube, said strip comprising an aluminum strip (1) having a first longitudinal edge (11) and a second longitudinal edge (12), said aluminum strip being provided with a copper cladding (2), **characterized in that**
the aluminum strip (1) is wider than the copper cladding (2), so that said aluminum strip is free from copper cladding in correspondence with said first longitudinal edge (1) and said second longitudinal edge (2).

2. The copper clad aluminum strip according to claim 1 wherein at least approximately 70% of the width of the aluminum strip is cladded with copper.

3. The copper clad aluminum strip according to any of claims 1 and 2, wherein the thickness of the copper cladding is less than approximately 12% of the total thickness of the copper clad aluminum strip.

4. The copper clad aluminum strip according to any of the preceding claims, for use as a conductor in a coaxial cable.

5. An overlaid, copper clad, aluminum conductor comprising a copper clad aluminum strip having two longitudinal ends (11, 12), **characterized in that** said copper clad aluminum strip is a strip according to any of the preceding claims.

6. The conductor according to claim 5, wherein at least 70% of the outer circumference of the conductor is clad with copper.

7. The conductor according to any of claims 5 and 6, wherein the thickness of the copper cladding is less than 12% of the total thickness of the copper clad aluminum portion of the conductor.

8. The conductor according to claim 5, wherein at least 70% of the inner circumference of the conductor is clad with copper.

9. The conductor according to claim 8, wherein the thickness of the copper cladding is less than 12% of the total thickness of the copper clad aluminum portion of the conductor.

10. The conductor according to any of claims 5-9, wherein the longitudinal ends (11, 12) of the strip are welded together.

11. A coaxial cable, **characterized in that** it comprises at least one conductor according to any of claims 5-10.

12. The coaxial cable according to claim 11, comprising two conductors arranged coaxially, each of said conductors being a conductor according to any of claims 5-10.

13. A method for making a copper clad aluminum product, the method comprising the steps of:
(a) processing an aluminum strip in a chamber under shield gas to be substantially free from contaminants;
(b) processing a copper strip in a chamber under shield gas to be substantially free from contaminants; and
(c) bonding the aluminum strip and the copper strip together to form a copper clad aluminum strip;
wherein the aluminum strip has a width and wherein the copper strip has a width being smaller than the width of the aluminum strip.

14. The method according to claim 13 wherein the processing an aluminum strip step includes the step of brushing the aluminum strip.

15. The method according to any of claims 13 and 14, wherein the processing a copper strip step includes the step of brushing the copper strip.

16. The method according to any of claims 13-15 wherein the shield gas in the processing steps is an inert gas.

17. The method according to claim 16 wherein the shield gas in the processing steps is argon.

18. The method according to any of claims 13-17 wherein the bonding step is a pressure-temperature bond.

19. The method according to any of claims 13-18 wherein the processing steps are conducted at above atmospheric pressure.

20. The method according to any of claims 13-19, further including the step of forming the copper clad aluminum strip into a tube.

21. The method according to claim 20, further comprising the step of joining longitudinal end portions of the copper clad aluminum strip by welding said end portions together, said end portions being free from copper cladding.

## Patentansprüche

1. Überdeckter, mit Kupfer beschichteter Aluminiumstreifen zur Verwendung als Leiter, wobei der Streifen zu einem Rohr geformt werden kann, wobei der Streifen einen Aluminiumstreifen (1) mit einer ersten Längskante (11) und einer zweiten Längskante (12) umfasst, wobei der Aluminiumstreifen mit einer Kupferbeschichtung (2) versehen ist, **dadurch gekennzeichnet, dass**
der Aluminiumstreifen (1) breiter als die Kupferbeschichtung (2) ist, so dass der Aluminiumstreifen in Übereinstimmung mit der ersten Längskante (1) und der zweiten Längskante (2) frei von Kupferbeschichtung ist.

2. Mit Kupfer beschichteter Aluminiumstreifen nach Anspruch 1, wobei mindestens 70 % der Breite des Aluminiumstreifens mit Kupfer beschichtet sind.

3. Mit Kupfer beschichteter Aluminiumstreifen nach einem beliebigen der Ansprüche 1 und 2, wobei die Dicke der Kupferbeschichtung kleiner als etwa 12 % der Gesamtdicke des mit Kupfer beschichteten Aluminiumstreifens ist.

4. Mit Kupfer beschichteter Aluminiumstreifen nach einem beliebigen der vorangehenden Ansprüche zur Verwendung als Leiter in einem Koaxialkabel.

5. Überdeckter, mit Kupfer beschichteter Aluminiumleiter, umfassend einen mit Kupfer beschichteten Aluminiumstreifen mit zwei Längsenden (11, 12), **dadurch gekennzeichnet, dass** der mit Kupfer beschichtete Aluminiumstreifen ein Streifen gemäß einem beliebigen der vorangehenden Ansprüche ist.

6. Leiter nach Anspruch 5, wobei mindestens 70 % des Außenumfangs des Leiters mit Kupfer beschichtet ist.

7. Leiter nach einem beliebigen der Ansprüche 5 und 6, wobei die Dicke der Kupferbeschichtung kleiner als 12 % der Gesamtdicke des mit Kupfer beschichteten Aluminiumabschnitts des Leiters ist.

8. Leiter nach Anspruch 5, wobei mindestens 70 % des Innenumfangs des Leiters mit Kupfer beschichtet ist.

9. Leiter nach Anspruch 8, wobei die Dicke der Kupferbeschichtung kleiner als 12 % der Gesamtdicke des mit Kupfer beschichteten Aluminiumabschnitts des Leiters ist.

10. Leiter nach einem beliebigen der Ansprüche 5-9, wobei die Längsenden (11, 12) des Streifens miteinander verschweißt sind.

11. Koaxialkabel, **dadurch gekennzeichnet, dass** es mindestens einen Leiter nach einem beliebigen der Ansprüche 5-10 umfasst.

12. Koaxialkabel nach Anspruch 11, umfassend zwei Leiter, die koaxial angeordnet sind, wobei jeder der Leiter ein Leiter nach einem beliebigen der Ansprüche 5-10 ist.

13. Verfahren zum Herstellen eines Produktes aus mit Kupfer beschichtetem Aluminium, wobei das Verfahren folgende Schritte umfasst:
(a) Verarbeiten eines Aluminiumstreifens in einer Kammer unter Schutzgas, damit er im Wesentlichen frei von Verunreinigungen ist;
(b) Verarbeiten eines Kupferstreifens in einer Kammer unter Schutzgas, damit er im Wesentlichen frei von Verunreinigungen ist; und
(c) Verbinden des Aluminiumstreifens und des Kupferstreifens, um einen mit Kupfer beschichteten Aluminiumstreifen zu bilden;
wobei der Aluminiumstreifen eine Breite aufweist und wobei der Kupferstreifen eine Breite aufweist, die kleiner als die Breite des Aluminiumstreifens ist.

14. Verfahren nach Anspruch 13, wobei der Schritt des Verarbeitens eines Aluminiumstreifens den Schritt des Bürstens des Aluminiumstreifens umfasst.

15. Verfahren nach einem beliebigen der Ansprüche 13 und 14, wobei der Schritt des Verarbeitens eines Kupferstreifens den Schritt des Bürstens des Kupferstreifens umfasst.

16. Verfahren nach einem beliebigen der Ansprüche 13-15, wobei das Schutzgas in den Verarbeitungsschritten ein Edelgas ist.

17. Verfahren nach Anspruch 16, wobei das Schutzgas in den Verarbeitungsschritten Argon ist.

18. Verfahren nach einem beliebigen der Ansprüche 13-17, wobei der Verbindungsschritt eine Druck-Temperatur-Verbindung ist.

19. Verfahren nach einem beliebigen der Ansprüche 13-18, wobei die Verarbeitungsschritte bei einem Druck über Atmosphärendruck durchgeführt werden.

20. Verfahren nach einem beliebigen der Ansprüche 13-19, ferner umfassend den Schritt des Formens des mit Kupfer beschichteten Aluminiumstreifens zu einem Rohr.

21. Verfahren nach Anspruch 20, ferner umfassend den Schritt des Verbindens von Längsendenabschnitten des mit Kupfer beschichteten Aluminiumstreifens durch Verschweißen der Endabschnitte miteinander, wobei die Endabschnitte frei von Kupferbeschichtung sind.

## Revendications

1. Bande d'aluminium doublée, revêtue de cuivre, destinée à être utilisée comme conducteur, ladite bande pouvant être formée en un tube, ladite bande comprenant une bande d'aluminium (1) ayant une première arête longitudinale (11) et une deuxième arête longitudinale (12), ladite bande d'aluminium étant munie d'un revêtement de cuivre (2), **caractérisée en ce que**:
- la bande d'aluminium (1) est plus large que le revêtement de cuivre (2) de sorte que la bande d'aluminium est dépourvue de revêtement de cuivre en correspondance avec ladite première arête longitudinale (11) et ladite deuxième arête longitudinale (12).

2. Bande d'aluminium revêtue de cuivre selon la revendication 1, dans laquelle au moins environ 70 % de la largeur de la bande d'aluminium est revêtue de cuivre.

3. Bande d'aluminium revêtue de cuivre selon l'une quelconque des revendications 1 et 2, dans laquelle l'épaisseur du revêtement de cuivre constitue moins de 12 % environ de l'épaisseur totale de la bande d'aluminium revêtue de cuivre.

4. Bande d'aluminium revêtue de cuivre selon l'une quelconque des revendications précédentes, destinée à être utilisée comme conducteur dans un câble coaxial.

5. Conducteur en aluminium doublé, revêtu de cuivre, comprenant une bande d'aluminium revêtue de cuivre ayant deux extrémités longitudinales (11, 12), **caractérisé en ce que** ladite bande d'aluminium revêtue de cuivre est une bande selon l'une quelconque des revendications précédentes.

6. Conducteur selon la revendication 5, dans lequel au moins 70 % de la circonférence externe du conducteur sont revêtus de cuivre.

7. Conducteur selon l'une quelconque des revendications 5 et 6, dans lequel l'épaisseur du revêtement de cuivre constitue moins de 12 % de l'épaisseur totale de la partie aluminium revêtue de cuivre du conducteur.

8. Conducteur selon la revendication 5, dans lequel au moins 70 % de la circonférence interne du conducteur sont revêtus de cuivre.

9. Conducteur selon la revendication 8, dans lequel l'épaisseur du revêtement de cuivre constitue moins de 12 % de l'épaisseur totale de la partie aluminium revêtue de cuivre du conducteur.

10. Conducteur selon l'une quelconque des revendications 5 à 9, dans lequel les extrémités longitudinales (11, 12) de la bande sont soudées ensemble.

11. Câble coaxial, **caractérisé en ce qu'**il comprend au moins un conducteur selon l'une quelconque des revendications 5 à 10.

12. Câble coaxial selon la revendication 11, comprenant deux conducteurs disposés coaxialement, chacun desdits conducteurs étant un conducteur selon l'une quelconque des revendications 5 à 10.

13. Procédé de fabrication d'un produit en aluminium revêtu de cuivre, le procédé comprenant les étapes consistant à :
(a) traiter une bande d'aluminium dans une chambre sous gaz protecteur pour qu'elle soit sensiblement dépourvue de contaminants ;
(b) traiter une bande de cuivre dans une chambre sous gaz protecteur pour qu'elle soit sensiblement dépourvue de contaminants ; et
(c) lier la bande d'aluminium et la bande de cuivre ensemble pour former une bande d'aluminium revêtue de cuivre ;
dans lequel la bande d'aluminium a une largeur et dans lequel la bande de cuivre a une largeur, qui est inférieure à la largeur de la bande d'aluminium.

14. Procédé selon la revendication 13, dans lequel l'étape consistant à traiter une bande d'aluminium comprend l'étape consistant à brosser la bande d'aluminium.

15. Procédé selon l'une quelconque des revendications 13 et 14, dans lequel l'étape consistant à traiter une bande de cuivre comprend l'étape consistant à brosser la bande de cuivre.

16. Procédé selon l'une quelconque des revendications 13 à 15, dans lequel le gaz protecteur dans les étapes de traitement est un gaz inerte.

17. Procédé selon la revendication 16, dans lequel le gaz protecteur dans les étapes de traitement est l'argon.

18. Procédé selon l'une quelconque des revendications 13 à 17, dans lequel l'étape de liaison est une liaison par pression - température.

19. Procédé selon l'une quelconque des revendications 13 à 18, dans lequel les étapes de traitement sont réalisées au-delà de la pression atmosphérique.

20. Procédé selon l'une quelconque des revendications 13 à 19, comprenant en outre l'étape consistant à former la bande d'aluminium revêtue de cuivre en un tube.

21. Procédé selon la revendication 20, comprenant en outre l'étape consistant à joindre les parties de l'extrémité longitudinale de la bande d'aluminium revêtue par soudure desdites parties de l'extrémité ensemble, lesdites parties de l'extrémité étant dépourvues de revêtement de cuivre.
